# EUROPÄISCHE PATENTANMELDUNG

(11) **EP 4 446 662 A1**
(43) Veröffentlichungstag der Anmeldung: **16.10.2024**
(21) Anmeldenummer: 24169715.0
(22) Anmeldetag: 11.04.2024
(51) Int. Cl.: F24D 11/02, F24H 15/144, F24H 15/168, F24H 15/37, F24H 15/375, H02J 3/14

(54) **VERWERTUNG EINES EXTERNEN LIMITIERUNGSSIGNALS FÜR EINE WÄRMEPUMPE**

(30) Priorität: 11.04.2023 DE 102023109036
(71) Anmelder: Vaillant GmbH, 42859 Remscheid NRW (DE)
(72) Erfinder: Langer, Jens, 42349 Wuppertal (DE); Eichholtz, David, 44805 Bochum (DE)
(74) Vertreter: Popp, Carsten

(57) **Zusammenfassung**

Verfahren zum Betrieb eines Systems von mindestens zwei elektrisch betriebenen Wärmepumpen-Geräten, die zusammen mit mindestens einer elektrischen Zusatzheizung in einer Wärmepumpen-Kaskade zusammengeschaltet sind und durch eine gemeinsame zentrale Steuereinheit gesteuert werden, wobei jede der Wärmepumpen und Zusatzheizungen je einen eigenen Nominalverbrauch an elektrischer Energie aufweist und der gesamte elektrische Energieverbrauch durch eine externe Leistungslimitierung auf ein veränderbares Signal hin jederzeit auf einen Maximalwert der Leistungsaufnahme beschränkt werden kann, und die zentrale Steuereinheit das externe Signal zur Leistungslimitierung empfängt und auswertet und eine mehrstufige Prüfung vornimmt, um einzelne elektrische Verbraucher gezielt abzuschalten, die zentrale Steuereinheit in einem ersten Schritt den nominalen elektrischen Leistungsverbrauch der gesamten Wärmepumpen-Kaskade ermittelt, die zentrale Steuereinheit den nominalen Leistungsverbrauch der gesamten Wärmepumpen-Kaskade mit der Leistungslimitierung vergleicht, und wenn die Leistungslimitierung über dem nominalen Leistungsverbrauch liegt, keine Abschaltungen vornimmt, wenn die Leistungslimitierung unter dem nominalen Leistungsverbrauch liegt, nacheinander alle elektrischen Zusatzheizer abschaltet, bis der verbleibende nominale Leistungsverbrauch unter der Leistungslimitierung liegt, wenn auch nach Abschaltung aller elektrischen Zusatzheizer die Leistungslimitierung unter dem verbleibenden Leistungsverbrauch liegt, nacheinander alle Wärmepumpen abschaltet, bis der verbleibende nominale Leistungsverbrauch unter der Leistungslimitierung liegt, wobei die Abschaltung gleicher Wärmepumpen und gleicher Zusatzheizer durch die zentrale Steuereinheit entsprechend der Dauer ihrer bisherigen Betriebszeit erfolgt, wobei die mit der längsten Betriebszeit zuerst abgeschaltet werden.

## Beschreibung

Die Erfindung bezieht sich auf ein Verfahren zum Betreiben einer Kaskadenschaltung kühl- und / oder wärmetechnischer Anlagen. Insbesondere betrifft es Kaskaden von mindestens zwei parallel geschalteten Wärmepumpen mit seriell oder parallel geschalteten elektrischen Zusatzheizern, und deren Limitierung ihrer elektrischen Leistungsaufnahme durch ein externes Limitierungssignal.

Kaskaden sind Verschaltungen von Anlagen, wie hier von kühl- und / oder wärmetechnischer Anlagen, und wie Wärmepumpen lange bekannter Stand der Technik. Sie werden beispielsweise in der EP 3 287 717 A1 derselben Anmelderin beschrieben. Die Verschaltungen derartiger Anlagen kann sowohl hinsichtlich der Rohrinstallationen für fließende Fluide wie Kältemittel oder Heiz- und Kühlwasser, als auch hinsichtlich der Steuerung der einzelnen Anlagen oder Anlagenteile erfolgen. Hierbei wird die Kaskadenschaltung üblicherweise dadurch eingeschaltet, dass ein Temperatursensor eine gemessene Temperatur mit einer Solltemperatur vergleicht und eine Differenz zum Wunschzustand feststellt. Die Kaskadenschaltung wird zumeist verwendet, um eine hohe Heiz- oder Kühlgesamtleistung bereitstellen zu können und hierbei einen sehr großen Modulationsbereich zu ermöglichen. Auch werden Kaskaden eingesetzt, um beim Ausfall eines Einzelgeräts mittels der anderen den Wärme- beziehungsweise Kältebedarf befriedigen zu können und Servicezeiten zu überbrücken.

Bei Kaskadenschaltungen von Heizgeräten werden in Abhängigkeit von einer Führungsgröße, zumeist eine Systemvorlauftemperatur, die Heizgeräte bedarfsgerecht zu- und abgeschaltet. Hierbei können entweder Geräte nur mit einer konstanten Leistung ein- und ausgeschaltet werden oder die einzelnen Geräte können modulierend betrieben werden, so dass bestimmte Kaskadenleistungen auf mehrere Arten erreicht werden können. So können beispielsweise viele Geräte mit Teillast anstelle weniger Geräte mit hoher beziehungsweise maximaler Last und andere ohne Last betrieben werden.

Werden Geräte zu- und abgeschaltet, besteht vor allem bei nicht modulierenden Geräten das Problem, dass es zu Vorlauftemperaturschwankungen und gegebenenfalls zum Takten kommt. Einen Ausweg bieten elektrische Zusatzheizer, die regelbar sind. Nach einem Abschalten wird häufig eine Wiederanlaufsperre aktiviert. Hierbei besteht das Problem, dass in manchen Fällen die Wärmeanforderung nicht oder nur unvollständig mit Komforteinbußen befriedigt werden kann. Ein weiterer Vorteil von modulierenden Geräten besteht darin, dass diese im Teillastbereich in der Regel effizienter arbeiten.

Durch den Ausbau der erneuerbaren elektrischen Energien im öffentlichen Verteilnetz auf der einen und der zunehmenden Nutzung lokaler starker elektrischer Verbraucher wie Wärmepumpen und Elektrofahrzeuge auf der anderen Seite wird es in Zukunft voraussichtlich zu vermehrten Stromengpässen in den Verteilungsnetzen kommen. Hinzu kommen schwankende Einspeisungen privater Stromerzeuger aus kleinen Windkraftanlagen und kleinen Solaranlagen. Auf der einen Seite sind elektrische erneuerbare Energien volatil, nicht immer verfügbar und nur bedingt vorhersagbar, auf der anderen Seite haben elektrische Verbraucher wie Elektrofahrzeuge eine extrem hohe Verbrauchsleistung beim Laden und sind bezüglich ihres Ladezeitraums ebenfalls schwer vorhersehbar, da der Ladezeitraum stark vom Nutzerverhalten abhängig ist. Hieraus ergeben sich im Stromnetz, vor allem im Verteilernetz häufiger Situationen, bei denen das Angebot verfügbarer elektrischer Leistung nicht für den aktuellen Bedarf ausreicht, was zu Netzüberlastungen führen kann.

In solchen Situationen benötigt der Energieversorger eine Möglichkeit, die Netzstabilität aufrecht zu erhalten. Eine Möglichkeit ist es, bei Gefahr einer Netzüberlastung einzelne angeschlossene elektrische Verbraucher kurzzeitig in ihrer erlaubten Verbrauchsleistung zu limitieren. Für diese Limitierung sendet der Energieversorger an einzelne, individuelle, meist bei Endverbrauchern angesiedelte elektrische Verbraucher ein Limitierungssignal, welches dazu führen soll, dass der Verbraucher, z.B. eine Wärmepumpe, weniger oder keine elektrische Leistung mehr aufnimmt. Wenn der Strom-Engpass im Netz entschärft ist, kann der Energieversorger das Limitierungssignal zurücknehmen und den Verbraucher wieder freigeben. Dieselbe Limitierung kann auch durch eigene private Energieerzeuger vorgenommen werden.

Die Frage ist dabei, wie ein Limitierungssignal von einem kaskadierten Verbrauchersystem verarbeitet und umgesetzt wird. Ein kaskadiertes Verbrauchersystem ist dabei ein elektrisches Verbrauchersystem, welches aus mehreren einzelnen elektrischen Verbrauchern bestehen kann, die im Verbund arbeiten. Dies kann ein klassisches Wärmepumpen-Gerät sein, welches aus einem Wärmepumpenteil, also einem Wärmepumpenkreis, und einem elektrischen Nachheizgerät besteht. Dies kann aber auch die Kaskadierung mehrerer Wärmepumpen-Geräte in Kombination mit einem elektrischen Nachheizgerät sein. Dann ist ein eingehendes Limitierungssignal auf die verschiedenen, in der Kaskade zusammenwirkenden einzelnen elektrischen Verbraucher zu verteilen.

Zurzeit haben Energieversorger nur die Möglichkeit, über eine Energie-Versorgungs-Unterbrechung, im Folgenden als EVU-Sperre bezeichnet, ein Sperrsignal an ein beim Kunden des Energieversorgers verbauten Verbrauchssystems zu senden. Eine EVU-Sperre wird beispielsweise bei Wärmepumpenanlagen der Kunden des Energieversorgers genutzt. Eine EVU-Sperre erlaubt aber lediglich, einen Verbraucher für einen bestimmten Zeitraum komplett abzuschalten, jedoch nicht, den Verbraucher individuell in der erlaubten Leistung zu reduzieren, da es sich bei der klassischen EVU-Sperre um ein ein-aus-Signal handelt.

Historisch sind EVU-Sperrsignale einmal entwickelt worden, um die sich aus den Standard-Lastprofilen, also statistischen Verbrauchsprofilen klassischer Haushalte mit Verbrauchsspitzen am Morgen und am Nachmittag und Abend, und den sehr gut bekannten Erzeugungsprofilen klassischer, nicht regenerativer Stromerzeugung ergebenden Leistungsengpässen entgegenzuwirken und Verbraucher wie Wärmepumpen zu bestimmten, zeitlich gut vorhersehbaren Zeiträumen über eine EVU-Sperre abzuschalten.

EVU-Sperrsignale werden heutzutage von Energieversorgern normalerweise nicht genutzt, um kurzfristige Engpässe im Stromnetz zu managen und sich kurzfristig ergebende Netzüberlastungen abzufedern, sondern um Lasten während vorher bekannter Zeiträume hoher Leistungsnachfrage abzuschalten, um einer möglichen Netzüberlastung präventiv entgegenzuwirken.

Durch den Umbau sowohl der Energieerzeugung hin zu volatilen erneuerbaren Energien als auch der Zunahme großer, schwer prognostizierbarer Verbraucher wie Elektrofahrzeuge und auch Wärmepumpen reicht ein EVU-Signal als Eingriffsmöglichkeit für den Energieversorger nicht mehr aus, da diese zu unflexibel und zu wenig bedarfsgerecht arbeiten.

Eine fortschrittlichere Leistungslimitierung definiert, dass ein Energieversorger einem Verbrauchssystem ein zeitlich befristetes oder zeitlich unbefristetes elektrisches Leistungslimit mit einer vom Energieversorger frei wählbaren Limitierungsleistung sendet. Im Folgenden werden die Unterschiede solcher Leistungslimitierung zum klassischen EVU-Sperrsignal beschrieben.

Im Gegensatz zum digitalen EVU-Signal "An" oder "Aus" kann mit der Leistungslimitierung ein Leistungslimit in Watt gesetzt werden, welches das Verbrauchssystem nicht überschreiten darf. Damit wird, anders als beim EVU-Signal, der Verbraucher nicht komplett abgeschaltet, sondern kann weiterlaufen, solange die Verbrauchsleistung unter dem definierten Leistungslimit verbleibt. Der Verbraucher kann also auf die Leistungslimitierung reagieren und seine Verbrauchsleistung reduzieren, ohne komplett den Betrieb einstellen zu müssen.

Weiterhin kann ein Energieversorger über die Leistungslimitierung das Leistungslimit jederzeit individuell an die aktuelle Netzauslastung anpassen, das Leistungslimit also zeitnah absenken oder auch anheben, um die limitierten Verbraucher an die zurzeit im Netz verfügbare Leistung anzupassen. Dies reduziert negative Effekte auf den Kundennutzen, wie beispielsweise auf die Beheizung eines Gebäudes durch eine Wärmepumpe, da ein Verbraucher nur so weit limitiert wird, wie die Netzstabilität zurzeit erfordert.

Im Gegensatz zum digitalen EVU-Signal kann ein Energieversorger ein Limit auch mit einer bestimmten Gültigkeitszeit versehen, der Verbraucher muss dieses Limit dann nur über die Dauer der Gültigkeitszeit beachten und kann danach seinen Betrieb wieder unlimitiert aufnehmen.

Im Gegensatz zum herkömmlichen EVU-Signal kann ein Verbrauchssystem auch ein eingehendes Leistungslimit ablehnen, wenn durch die Leistungslimitierung etwa Sicherheitsfunktionen des Verbrauchssystems wie eine Frostschutzfunktion eines Wärmepumpen-Gerätes gefährdet wären. Ein Energieversorger kann diese Ablehnung eines Leistungslimits auswerten und als Reaktion auf die Ablehnung des Leistungslimits ein anderes Verbrauchssystem in einem anderen Haushalt desselben Verteilnetzes limitieren.

Im Gegensatz zum klassischen EVU-Signal, welches keinerlei Informationen vom Verbrauchssystem zurück zum Energieversorger ermöglicht, soll ein Verbrauchssystem seine aktuelle elektrische Verbrauchsleistung dem Energieversorger zurückmelden. Das geht also über das bekannte EVU-Sperrsignal deutlich hinaus.

Da über die Leistungslimitierung Verbrauchssysteme nicht zwingend komplett abgeschaltet, sondern nur in ihrer erlaubten Verbrauchsleistung limitiert werden, muss ein Verbrauchssystem eine Entscheidung treffen, wie ein eingehendes Leistungslimit umgesetzt wird. Diese Entscheidung stellt sich vor allem bei Verbrauchssystemen, die nicht nur einen elektrischen Verbraucher beinhalten, sondern mehrere kaskadierte Verbraucher. Dies sind auch Wärmepumpensysteme, die aus einem Wärmepumpenkreislauf als primären elektrischen Verbraucher und thermischen Generator bestehen sowie aus einem elektrischen Zusatzheizer, der den Wärmepumpenkreislauf bei der thermischen Leistungserzeugung unterstützen kann. Weiterhin kann ein Verbrauchssystem auch aus mehreren individuellen Wärmepumpengeräten sowie einem oder mehreren elektrischen Zusatzheizern bestehen, die in einer Wärmepumpenkaskade verschaltet sind und größere Mehrfamilienhäuser mit Wärme, Kälte und Warmwasser versorgen.

Im herkömmlichen einschlägigen Stand der Technik werden die einzelnen Wärmepumpen-Kreisläufe in Wärmepumpenkaskaden heutzutage in folgender Weise angesteuert, wobei solche Wärmepumpen-Kaskaden klassischerweise in thermischen Verbrauchssystemen mit einem hohen nominalen thermischen Bedarf sowie in Zeiten mit sehr niedrigem thermischen Bedarf eingesetzt werden, beispielsweise in Mehrfamilienhäusern. Durch die Kaskadierung mehrerer Wärmepumpen-Geräte mit mehreren Wärmepumpenkreisläufen kann ein sehr breites Band an thermischen Bedarfen abgedeckt werden. Bei geringem thermischen Bedarf werden nur eine oder mehrere Wärmepumpen-Kreisläufe der Kaskade aktiviert, also überhaupt eingeschaltet und auch angesteuert, bei höherem oder hohem Bedarf bis zu alle Wärmepumpen-Kreisläufe.

Bei der Aktivierung einzelner Wärmepumpen-Kreisläufe muss nun entschieden werden, welche der vorhandenen Wärmepumpen-Kreisläufe aktiviert werden, und welche abgeschaltet bleiben. Hierzu ist ein klassischer Weg, zunächst diejenigen Wärmepumpen-Kreisläufe einzuschalten, die in der Kaskade bisher die geringste Laufzeit hatten, da über diese Priorisierung sichergestellt wird, dass über einen langen Zeitraum alle Wärmepumpen-Kreisläufe ähnlich viele Betriebsstunden aufweisen.

Eine Steuereinheit, welche eine Wärmepumpen-Kaskade steuert, wird also typischerweise für die anzusteuernden Wärmepumpen-Kreisläufe eine Einschaltreihenfolge definieren, beispielsweise auf Basis der bisherigen Betriebsstunden. Die Art und Weise, wie diese Einschaltreihenfolge berechnet wird, ist hierbei nicht relevant. Jedoch ist die Einschaltreihenfolge relevant für die vorliegende Erfindung.

Hierbei haben die elektrischen Verbraucher und thermischen Erzeuger bedingt durch ihre jeweilige Technologie unterschiedliche Nutzungsgrade, sie setzen elektrischen Energie unterschiedlich effizient in thermische Energie um. Ein Wärmepumpenkreislauf hat klassischerweise hier den höchsten Umsetzungsgrad, auch als Normnutzungsgrad oder COP - Coefficient of Performance bezeichnet, da der Wärmepumpenkreislauf die benötigte thermische Energie durch einen Wärmepumpen-Prozess zum großen Teil aus dem Entzug thermischer Energie aus der Umgebung und nur zum kleinen Teil durch Antrieb dieses Wärmepumpen-Prozesses mittels elektrischer Energie gewinnt. Der Wärmepumpen-Prozess hat somit für den Nutzer den höchsten Nutzen, da er die benötigte thermische Energie mit den geringsten elektrischen Leistungsverbräuchen und dem höchsten COP und somit den geringsten Stromkosten erzeugen kann.

Wenn dann die in einem Wärmepumpen-Prozess erzeugbare thermische Energie nicht ausreicht, wird klassischerweise mit elektrischen Zusatzheizern zusätzliche thermische Energie direkt aus elektrischer Energie erzeugt. Hier ist technologiebedingt der Normnutzungsgrad deutlich schlechter, somit der elektrische Leistungsverbrauch sowie die Stromkosten für den Kunden für die erzeugte thermische Nutzenergie deutlich höher als beim Wärmepumpen-Prozess. Daher werden elektrische Zusatzheizer erst dann eingesetzt, wenn der Wärmepumpen-Prozess allein die benötigte thermische Leistung nicht liefern kann.

Bei sehr großen thermischen Verbrauchssystemen wie etwa in Mehrfamilienhäusern werden klassischerweise mehrere Wärmepumpen-Geräte und ein oder mehrere elektrische Zusatzheizer in einer Kaskade kombiniert. Hier werden nun geringe thermische Leistungsbedarfe durch eine oder mehrere Wärmepumpen-Prozesse von einer oder mehrerer Wärmepumpen-Geräte in der Kaskade bedient, bei höheren oder sehr hohen thermischen Leistungsanforderungen auch durch alle in der Kaskade verfügbaren Wärmepumpen-Prozesse und bei Bedarf zusätzlich durch eine oder mehrere elektrische Zusatzheizungen bedient.

Wenn nun diese oben beschriebenen thermischen Erzeugungssysteme durch eine oben beschriebene Leistungslimitierung in ihrer elektrischen Leistungsaufnahme limitiert werden sollen, so bedarf es einer technischen Strategie, wie das eingehende Leistungslimit auf die einzelnen elektrischen Verbraucher des thermischen Erzeugungssystems so aufgeteilt wird, dass folgende Kriterien erfüllt werden:
- Erfüllung des Leistungslimits der Energieversorgung, das heißt keine Überschreitung der erlaubten oder überhaupt möglichen Verbrauchsleistung,
- möglichst geringe Einschränkung der thermischen Erzeugungsleistung des thermischen Erzeugungssystems und somit möglichst geringer Einfluss auf Kundennutzen und Komfort des Nutzers des thermischen Erzeugungssystems,
- möglichst geringe elektrische Stromkosten für den Nutzer des thermischen Erzeugungssystems.

Die Aufgabe der Erfindung ist daher, bei einer extern vorgegebenen Leistungslimitierung ein eingehendes Leistungslimit auf die einzelnen elektrischen Verbraucher eines elektrischen Verbrauchssystems zu verteilen, wobei das elektrische Verbrauchssystem mindestens zwei elektrisch betriebene Wärmepumpen-Geräte mitumfasst, und diese mindestens zwei Wärmepumpen-Geräte auch mindestens einen elektrischem Zusatzheizer mitumfassen, wobei die Geräte alle in einer Wärmepumpenkaskade bestehend aus mehreren Wärmepumpen-Geräten und einem oder mehreren elektrischen Zusatzheizern eingebunden ist. Die Verteilung soll die Auswahl des Verbrauchers ermöglichen, unter Einhaltung des Leistungslimits den größtmöglichen Kundenkomfort oder die kleinstmöglichen Stromkosten einzustellen.

Die Aufteilung eines eingehenden Leistungslimits erfolgt dabei durch eine zentrale Steuereinheit. Diese nimmt das Leistungslimit entgegen, bewertet es und teilt zu, wobei in einem ersten Schritt der nominale Leistungsverbrauch des elektrischen Verbrauchssystems ermittelt wird. Dies geschieht, indem ermittelt wird, welchen nominalen Leistungsverbrauch die einzelnen Teile des elektrischen Verbrauchssystems aufweisen. Der nominale Leistungsverbrauch ist dabei die nominale Leistung, die ein elektrischer Verbraucher entsprechend seiner technischen Daten oder seiner individuellen, anlagenspezifischen Einstellungen aufweist, also die Leistung, die ein elektrischer Verbraucher im bestimmungsgemäßen Betrieb nicht überschreitet. Dieser bestimmungsgemäße Betrieb ist dabei zeitlich variabel und im Allgemeinen zu verschiedenen Zeitpunkten unterschiedlich.

Der Nominale Leistungsverbrauch wird für elektrische Verbrauchssysteme, die aus einem Wärmepumpengerät mit integriertem elektrischem Zusatzheizer bestehen, einzeln für den Wärmepumpenkreislauf und den elektrischen Zusatzheizer ermittelt. Die Ermittlung der elektrischen Verbrauchsdaten durch die Steuereinheit kann durch Auslesen der Verbrauchsdaten aus dem jeweiligen elektrischen Verbraucher geschehen. Die Verbrauchsdaten hängen dabei in der Regel von den aktuellen Umgebungsbedingungen, also von der Temperatur der Wärmequelle, sowie vom Temperaturniveau der Wärmesenken ab, also der Temperatur in Heizkörpern oder Warmwasser, und können entsprechend der Temperaturspreizung zwischen Wärmequelle und Wärmesenke schwanken. Sie sind nicht zu verwechseln mit den Maximalleistungsaufnahmen unter Ideal- oder Grenzbedingungen.

Im Falle eines externen, nicht zu einem Wärmepumpengerät gehörenden elektrischen Zusatzheizers wird dessen nominaler Leistungsverbrauch durch die Steuereinheit ermittelt, auch hier durch Auslesen der Daten von diesem elektrischen Zusatzheizer. Somit werden für die vorliegenden Wärmepumpenkaskaden durch die Steuereinheit für jedes Wärmepumpen-Gerät einzeln je der nominale Leistungsverbrauch des Wärmepumpenkreislaufs und, falls vorhanden, des integrierten elektrischen Zusatzheizers getrennt ermittelt.

Bei einem eingehenden Leistungslimit ermittelt die Steuereinheit in einem ersten Schritt zunächst, ob das elektrisches Verbrauchssystem überhaupt limitiert werden muss. Hierzu vergleicht die Steuereinheit das eingehende Leistungslimit mit der Summe der nominalen Leistungsverbräuche des Verbrauchssystems. So vergleicht die Steuereinheit bei jedem Wärmepumpen-Gerät mit integriertem elektrischen Zusatzheizer die Summe aus Nominalleistung des Wärmepumpen-Kreislaufs und des elektrischen Zusatzheizers mit dem eingehenden Leistungslimit und addiert alle Nominalleistungen. Da jedes Wärmepumpengerät im Betrieb nicht mehr Leistung verbrauchen kann, als diese Summe der Nominalleistungen, entscheidet die Steuereinheit über dieses Kriterium, ob die Wärmepumpenkaskade zurzeit überhaupt limitiert werden muss.

Falls die Nominalleistung der gesamten Wärmepumpenkaskade einschließlich aller elektrischen Zusatzheizer unterhalb des externen Leistungslimits liegt, wird entschieden, welcher der elektrischen Verbraucher im elektrischen Verbrauchssystem wie stark limitiert wird. Dazu wird in einem zweiten Schritt geprüft, ob die Summe der Nominalleistung der gesamten Wärmepumpenkaskade ohne Zusatzheizer unter dem externen Leistungslimit liegt.

Sofern die Nominalleistung der gesamten Wärmepumpenkaskade ohne Zusatzheizer unter dem externen Leistungslimit liegt, wird in einem dritten Schritt geprüft, ob eine Abschaltung einzelner Zusatzheizer das gesamte System unter das externe Leistungslimit gebracht werden kann. Wenn dies der Fall ist, werden so viele Zusatzheizer wie nötig abgeschaltet. Hierbei werden zuerst diejenigen Zusatzheizer abgeschaltet, die die bisher längste Betriebszeit aufweisen.

In einer Ausgestaltung wird auch geprüft, ob alle Zusatzheizer dieselbe Nominalleistung aufweisen. Wenn dies nicht der Fall ist, wird ermittelt, mit welchem der Zusatzheizer im eingeschalteten Zustand das Limitierungslimit noch unterschritten werden kann. Dann werden alle Zusatzheizer außer diesem abgeschaltet. Können auch weitere Zusatzheizer eingeschaltet bleiben. ohne das Limitierungslimit zu überschreiten, werden nur diejenigen Zusatzheizer abgeschaltet, deren Einschaltung das Limitierungslimit überschreiten würde.

In einer weiteren Ausgestaltung wird auch geprüft, ob die Zusatzheizer oder einzelne davon in ihrer Leistungsaufnahme regelbar sind. Ist dies der Fall, werden alle Zusatzheizer so abgeregelt, dass sie alle mit geminderter Leistung eingeschaltet bleiben können, ohne dass die Leistungslimitierung überschritten wird.

Sofern die Nominalleistung der Wärmepumpenkaskade ohne Zusatzheizer insgesamt über der Leistungslimitierung liegt, schaltet die Systemsteuerung eine Wärmepumpe nach der anderen ab, bis die Summe der Nominalleistungen der verbliebenen Wärmepumpen unter der Leistungslimitierung liegt. Hierbei geht sie bei Wärmepumpen gleicher Nominalleistung so vor, dass zunächst die Wärmepumpen mit der bisher längsten Betriebszeit abgeschaltet werden. Bei Wärmepumpen unterschiedlicher Nominalleistung minimiert sie die Anzahl der abzuschaltenden Wärmepumpen, indem sie errechnet, mit welchen Abschaltungen in der Summe die Leistungslimitierung so gering wie möglich unterschritten wird. Sofern dies mit mehreren Kombinationen von Abschaltungen möglich ist, werden nacheinander diejenigen Wärmepumpen abgeschaltet, die die jeweils längste bisherige Betriebszeit aufweisen.

## Patentansprüche

1. Verfahren zum Betrieb eines Systems von mindestens zwei elektrisch betriebenen Wärmepumpen-Geräten, die zusammen mit mindestens einer elektrischen Zusatzheizung in einer Wärmepumpen-Kaskade zusammengeschaltet sind und durch eine gemeinsame zentrale Steuereinheit gesteuert werden, wobei jede der Wärmepumpen und Zusatzheizungen je einen eigenen Nominalverbrauch an elektrischer Energie aufweist und der gesamte elektrische Energieverbrauch durch eine externe Leistungslimitierung auf ein veränderbares Signal hin jederzeit auf einen Maximalwert der Leistungsaufnahme beschränkt werden kann, und
- die zentrale Steuereinheit das externe Signal zur Leistungslimitierung empfängt und auswertet und eine mehrstufige Prüfung vornimmt, um einzelne elektrische Verbraucher gezielt abzuschalten,
- die zentrale Steuereinheit in einem ersten Schritt den nominalen elektrischen Leistungsverbrauch der gesamten Wärmepumpen-Kaskade ermittelt,
- die zentrale Steuereinheit den nominalen Leistungsverbrauch der gesamten Wärmepumpen-Kaskade mit der Leistungslimitierung vergleicht, und
- wenn die Leistungslimitierung über dem nominalen Leistungsverbrauch liegt, keine Abschaltungen vornimmt,
- wenn die Leistungslimitierung unter dem nominalen Leistungsverbrauch liegt, nacheinander alle elektrischen Zusatzheizer abschaltet, bis der verbleibende nominale Leistungsverbrauch unter der Leistungslimitierung liegt,
- wenn auch nach Abschaltung aller elektrischen Zusatzheizer die Leistungslimitierung unter dem verbleibenden Leistungsverbrauch liegt, nacheinander alle Wärmepumpen abschaltet, bis der verbleibende nominale Leistungsverbrauch unter der Leistungslimitierung liegt,
- **dadurch gekennzeichnet, dass**
- die Abschaltung gleicher Wärmepumpen und gleicher Zusatzheizer durch die zentrale Steuereinheit entsprechend der Dauer ihrer bisherigen Betriebszeit erfolgt, wobei die mit der längsten Betriebszeit zuerst abgeschaltet werden.

2. Verfahren nach Anspruch 1, **dadurch gekennzeichnet, dass** bei regelbaren Zusatzheizern der Leistungsverbrauch bis zum Erreichen der Leistungslimitierung herabgeregelt wird und nur, wenn dies nicht ausreicht, eine Abschaltung erfolgt.

3. Verfahren nach Anspruch 1, **dadurch gekennzeichnet, dass** bei nicht regelbaren Zusatzheizern unterschiedlicher Leistungsaufnahme diejenigen Zusatzheizer zuerst abgeschaltet werden, deren Leistungsverringerung die Einhaltung der Leistungslimitierung mit dem geringsten Leistungsverlust bewirkt.

4. Verfahren nach Anspruch 1, **dadurch gekennzeichnet, dass** bei Wärmepumpen unterschiedlicher Nominalleistung diejenigen Wärmepumpen mit der geringsten Nominalleistung zuerst abgeschaltet werden.
